# EUROPÄISCHE PATENTSCHRIFT

(11) **EP 1 219 793 B1**
(45) Veröffentlichungstag und Bekanntmachung des Hinweises auf die Patenterteilung: **23.11.2005**
(21) Anmeldenummer: 01126815.8
(22) Anmeldetag: 10.11.2001
(51) Int. Cl.: F01N 3/021, F01N 3/022, B01D 46/24, F01N 3/023

(54) **Filtereinrichtung**
Filter device
Dispositif de filtre

(30) Priorität: 29.12.2000 DE 20022035 U
(43) Veröffentlichungstag der Anmeldung: 03.07.2002
(73) Patentinhaber: Thomas Josef Heimbach Gesellschaft mit beschränkter Haftung, 52353 Düren (DE)
(72) Erfinder: Ebener Bernd, 52457 Aldenhoven (DE)
(74) Vertreter: Paul, Dieter-Alfred

(56) Entgegenhaltungen:
- EP-A- 0 487 486
- EP-A- 1 013 328
- DE-A- 19 910 259
- US-A- 4 695 300
- US-A- 4 923 487

## Beschreibung

Die Erfindung betrifft eine Filtereinrichtung, insbesondere zum Abscheiden von Dieselrußpartikeln aus Dieselmotorabgasen, mit einem Filtergehäuse, das einen Gaseintritt und einen Austrittskanal aufweist und in dem ein Filterkörper angeordnet ist, der den Austrittskanal wenigstens teilweise umgibt und im wesentlichen in Richtung auf den Austrittskanal durchströmt ist, wobei der Filterkörper von gestapelten Filterscheiben aus porösem, filterwirksamem Keramikmaterial gebildet ist, die abwechselnd einströmseitig und ausströmseitig offene Zwischenräume einfassen.

Für die Heißgasfiltration, beispielsweise die Filtration von Dieselmotorabgasen oder von Abgasen aus großen Anlagen wie Müllverbrennungsanlagen etc., werden Filtereinrichtungen mit Filterkörpern aus keramischem Material verwendet. Als besonders geeignet hat sich hierfür SiC-Material erwiesen, wie es beispielsweise in der EP 0 796 830 A1 beschrieben ist.

Im Stand der Technik sind Filterkörper bekannt, die kreisrunden, ovalen oder rechteckigen Querschnitt haben und die eine Vielzahl von Axialkanälen aufweisen, die abwechselnd eintrittsseitig oder austrittsseitig gasundurchlässig verschlossen sind. Das zu reinigende Gas kann eintrittsseitig in die dort offenen Kanäle eintreten. Da diese austrittsseitig geschlossen sind, ist das Gas gezwungen, durch die porösen Längswandungen der Kanäle durchzuströmen und über die jeweils benachbarten und austrittsseitig offenen Kanäle auszuströmen. Die Wandungen der Kanäle sind porös und filterwirksam, so daß sich dort die Rußpartikel absetzen.

Solche Filterkörper werden in Filtergehäuse eingesetzt und im wesentlichen axial in der vorbeschriebenen Weise durchströmt (vgl. US 4 897 096; EP 0 336 883 A1). Eine solche axiale Durchströmung ist auch bei der Filtereinrichtung nach dem DE 298 22 871.8 vorhanden, auch wenn Gaseintritt und Gasaustritt quer zur axialen Erstreckung der Filterkörper erfolgt.

Abweichend davon sind Filtereinrichtungen bekannt, bei denen eine Vielzahl von sich in Durchströmrichtung erstreckenden Filterkörpern nebeneinander angeordnet sind (vgl. Figur 7 der EP 0 336 883; DE 38 36 697 A1; EP 0 486 422 A1). Die zylinderförmigen Wandungen der Filterkörper sind porös und filterwirksam und werden von außen nach innen durchströmt. Der Eintritt ist teilweise axial, teilweise radial, während der Austritt generell axial ist. Bei einer Variante (DE 40 26 375 C1) werden die Filterkörper einmal von außen und einmal von innen her durchströmt, wobei die generelle Durchströmrichtung trotz des radialen Eintritts im wesentlichen axial ist. Bei der Ausführung nach der EP 0 454 346 A1 erfolgt eine Durchströmung der rohrförmigen Filterkörper ausschließlich von innen nach außen.

Des weiteren sind Filtereinrichtungen bekannt, bei denen zylinderförmige Filterkörper aus keramischem Material radial über den Gaseintritt angeströmt werden (US 4 436 538, Figur 2; EP 0 522 245 A1). Das Gas durchströmt die zylindrischen Wandungen der Filterkörper radial und wird dann axial zum offenen Ende der Filterkörper umgelenkt.

In der US 4 695 300 A, DE 199 10 258 A1 und DE 199 10 259 A1 ist eine Filtereinrichtung der eingangs genannten Art beschrieben, bei der ein Filterkörper von gestapelten Filterscheiben aus porösem filterwirksamem Material gebildet ist, die abwechselnd einströmseitig und ausströmseitig offene Zwischenräume einfassen. Die Filterscheiben sind kegelförmig ausgebildet und so gestapelt, daß benachbarte Filterscheiben abwechselnd außen- und innenseitig aneinander liegen. Der Filterkörper umgibt einen kreisförmigen Austrittskanal, über die das Abgas des Dieselmotors, das die Filterscheiben passiert hat, axial aus dem Filterkörper ausströmen kann. Die Anströmung des Filterkörper geschieht über einen zentralen und sich in axialer Richtung erstreckenden Gaseintritt, von dem das Abgas nach außen umgelenkt werden muß, damit es in die anströmseitig offenen Zwischenräume einströmen und dann die Filterscheiben durchströmen kann.

In der EP 0 336 883 A1 ist eine Filtereinrichtung in den Figuren 2 und 3 dargestellt, bei der ebenfalls kreisrunde Filterscheiben zur Anwendung kommen, die jedoch in diesem Fall eben ausgebildet sind. Die Filterscheiben werden hier axial angeströmt und durchströmt.

Die bekannten Filtereinrichtungen lassen im Regelfall keine motornahe Anordnung zu, weil das Abgas aus den einzelnen Zylindern des Motors zunächst gesammelt werden muß und erst dann der Filtereinrichtung zugeführt werden kann. Auf diesem Weg ist das Abgas so stark abgekühlt, daß eine Reinigung der Filterkörper durch Abbrennen der Rußpartikel nur mit erheblichem Aufwand möglich ist. Damit die für das Abbrennen der Rußpartikel erforderliche Temperatur erreicht wird, ist eine elektrische Aufheizung des Abgases oder des Filterkörpers selbst erforderlich.

Der Erfindung liegt die Aufgabe zugrunde, eine Filtereinrichtung der eingangs genannten Art so zu gestalten, daß trotz geringem Raumaufwand eine große Filterfläche zur Verfügung gestellt wird und daß eine motornahe Installation möglich ist.

Diese Aufgabe wird erfindungsgemäß dadurch gelöst, daß der Gaseintritt auf Höhe des Filterkörpers liegt und quer zum Austrittskanal gerichtet ist. Aufgrund dieser erfindungsgemäßen Ausbildung ist eine motornahe Installation möglich, da die Abgase unmittelbar und vorzugsweise über eine der Zahl der Auspuffkanäle am Zylinderkopf entsprechende Anzahl von Gaseintrittsöffnungen in das Filtergehäuse einmünden können, wenn die Länge der Filtereinrichtung in etwa derjenigen des Zylinderkopfes entspricht. Die heißen Abgase strömen den Filterkörper direkt seitlich an, so daß es für eine Reinigung der Filterscheiben durch Abbrennen der Rußpartikel ausreicht, wenn eine Zündgasbeschickung vorgenommen oder Treibstoff eingespritzt wird. Die Filterfläche kann durch entsprechende Größe und Anzahl der Filterscheiben an die jeweiligen Anforderungen angepaßt werden. Dies gilt auch für den Durchmesser des Austrittskanals, wobei der Austrittskanal auch zu beiden Seiten hin offen ausgebildet sein kann. Der Abstand der Gaseintrittsöffnungen sollte dabei an die Abstände der Auspuffkanäle des jeweiligen Motors angepaßt sein, so daß nach Möglichkeit Umlenkungen vermieden werden und die Installation der Filtereinrichtung unmittelbar am Zylinderkopf möglich ist.

Die Filterscheiben können beliebige Form aufweisen und müssen den Austrittskanal nicht vollständig umgeben. Zweckmäßigerweise sollten die Filterscheiben jedoch kreisförmig sein und einen ebenfalls kreisrunden Austrittskanal einschließen.

In weiterer Ausgestaltung der Erfindung ist vorgesehen, daß die Filterscheiben kegelförmig ausgebildet und so gestapelt sind, daß benachbarte Filterscheiben nach Art von Tellerfedern abwechselnd außen- und innenseitig aneinander liegen. Ein solcher Filterkörper ist an sich durch die schon oben genannten DE 199 10 258 A1 und DE 199 10 259 A1 bekannt. Alternativ dazu kann jedoch vorgesehen sein, daß die Filterscheiben eben ausgebildet sind und sich parallel zueinander erstrecken. In diesem Fall sollten die Zwischenräume abwechselnd außenseitig und innenseitig über Axialstege abgeschlossen sein. Dabei ist es zweckmäßig, wenn die Axialstege gasdicht ausgebildet sind, damit der Gasstrom gezwungen wird, nur durch die Filterscheiben selbst hindurchzuströmen.

In weiterer Ausgestaltung der Erfindung ist vorgesehen, daß sich Filterscheiben mit eintrittsseitigen Axialstegen und Filterscheiben mit austrittsseitigen, jeweils in gleicher Richtung abstehenden Axialstegen abwechseln, welche jeweils an der benachbarten Filterscheibe oder am Filtergehäuse anliegen. Auf diese Weise kann der Filterkörper aus nur zwei Arten von Filterscheiben zusammengesetzt werden, indem jeweils eine Filterscheibe mit eintrittsseitigem Axialsteg auf eine Filterscheibe mit austrittsseitigem Axialsteg gestapelt wird. Die Axialstege können aus dem gleichen Material bestehen wie die Filterscheiben selbst, also angeformt sein. Dabei kann vorgesehen sein, daß die Filterscheiben an den den Axialstegen gegenüberliegenden Seiten an diesen anliegende Überlappungsstege aufweisen, um eine flächige Anlage zu erhalten. Axialstege und Überlappungsstege einer Filterscheibe können in die gleiche axiale Richtung abstehen.

Nach einem weiteren Merkmal der Erfindung ist vorgesehen, daß die Filterscheiben über den Umfang verteilt Einbuchtungen aufweisen, die vorteilhafterweise keilförmig ausgebildet sind. Diese Einbuchtungen lassen eine Axialströmung zu und gewährleisten hierdurch eine gute Verteilung des einströmenden Abgases innerhalb des Filtergehäuses.

Grundsätzlich sollte die Filtereinrichtung so gestaltet sein, daß das Filtergehäuse den Filterkörper bis auf den Eintrittsbereich eng umgibt. Dies ist jedoch nicht unbedingt erforderlich. Es ist sogar denkbar, daß in dem Filtergehäuse nebeneinander mehrere Filterkörper, jeweils bestehend aus übereinandergestapelten Filterscheiben, angeordnet sind, wodurch sich auch eine entsprechende Anzahl von Austrittskanälen ergibt. Auch können über den Umfang verteilt Gaseintritte vorhanden sein, um einen optimalen Gaseintritt im Bereich zwischen zwei Zylinderreihen eines V-Motors zu erhalten.

Von Vorteil ist auch, wenn das Filtergehäuse mit einer Wärmeisolierschicht versehen ist, damit das einströmende Abgas möglichst wenig Wärme verliert und das Filtergehäuse außenseitig kühl bleibt.

Wie schon eingangs erwähnt, eignen sich als Material für die Filterscheiben insbesondere SiC, aber auch andere Carbide der Schwermetalle. Um eine elektrische Aufheizung und damit ein Verbrennen des Rußes zu ermöglichen, sollte wenigstens ein Teil der Filterscheiben mindestens teilweise elektrisch leitfähig ausgebildet sein, beispielsweise wenigstens zwei benachbarte Filterscheiben. Diese können dann mit elektrischen Kontakten versehen sein, über die ein elektrischer Strom auf die elektrisch leitfähigen Filterscheiben gegeben werden kann. Dabei ist der elektrische Widerstand so eingestellt, daß sich die Filterscheiben bei Aufgabe des Stroms auf eine solche Temperatur aufheizen, daß der Ruß abbrennt.

Schließlich ist gemäß der Erfindung vorgesehen, daß die Filterscheiben eine Dicke bis zu 2 mm und eine mittlere Porengröße zwischen 10 und 100 µm, vorzugsweise zwischen 30 und 80 µm, haben.

In der Zeichnung ist die Erfindung anhand eines Ausführungsbeispiels näher veranschaulicht. Es zeigen:
- Figur 1: einen Querschnitt durch die erfindungsgemäße Filtereinrichtung und
- Figur 2: eine Draufsicht auf eine Hälfte einer Filterscheibe der Filtereinrichtung gemäß Figur 1.

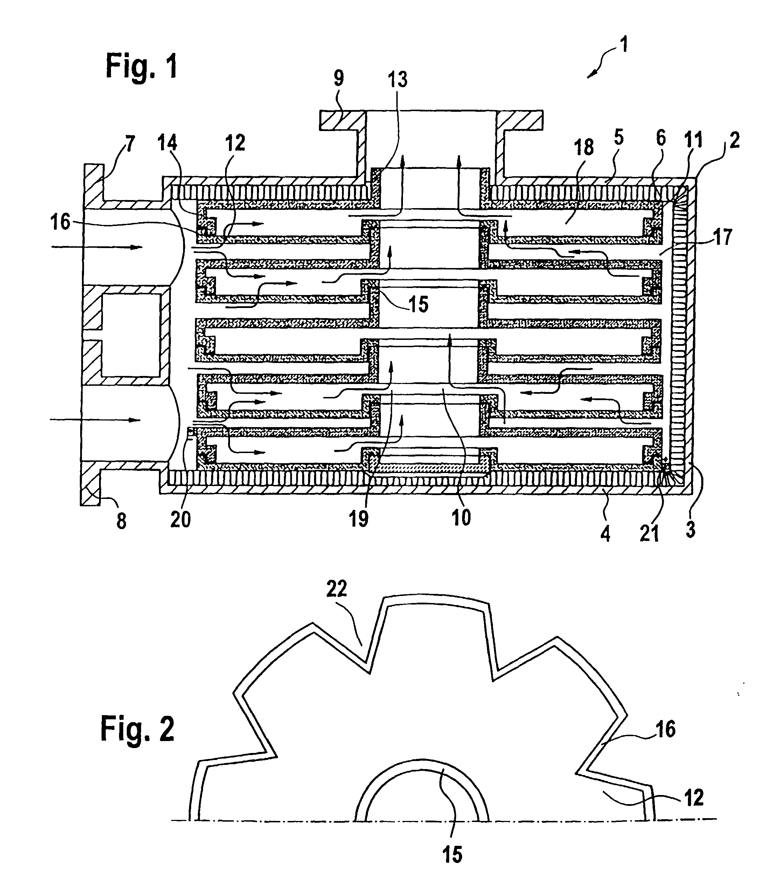

Die in Figur 1 dargestellte Filtereinrichtung 1 weist ein im wesentlichen zylindrisches Filtergehäuse 2 auf, das eine Umfangswandung 3, eine erste Seitenwandung 4 und eine zweite Seitenwandung 5 aufweist. Innenseitig ist das Filtergehäuse 2 mit einer Wärmeisolationsschicht 6 versehen.

Das Filtergehäuse 2 weist linksseitig zwei nebeneinanderliegende Eintrittsstutzen 7, 8 und an der zweiten Seitenwandung 5 einen zentralen Austrittsstutzen 9 auf. Die Eintrittsstutzen 7, 8 können mit dem zylinderkopf eines Dieselmotors verbunden werden, während sich an den Austrittsstutzen 9 ein Auspuffrohr anschließen läßt. Der Austrittsstutzen 9 bildet das Ende eines sich zentral durch das Filtergehäuse 2 erstreckenden, kreisrunden Austrittskanals 10.

In das Filtergehäuse 2 sind abwechselnd zwei Arten von Filterscheiben - die eine beispielhaft mit 11 und die andere beispielhaft mit 12 bezeichnet - gestapelt. Die einen Filterscheiben 11 haben innenseitig einen in Richtung des Austrittsstutzens 9 vorstehenden Axialsteg - beispielhaft mit 13 bezeichnet - und außenseitig einen entgegengesetzt gerichteten Überlappungssteg 14. Die anderen Filterscheiben 12 weisen innenseitig in Richtung des Austrittsstutzens 9 hochstehende Überlappungsstege - beispielhaft mit 15 bezeichnet - sowie außenseitig in gleicher Richtung hoch stehende Axialstege - beispielhaft mit 16 bezeichnet - auf. Die Filterscheiben 11, 12 haben gleiche Abstände, so daß zwischen ihnen Zwischenräume - beispielhaft mit 17 bzw. 18 bezeichnet - gebildet werden, und zwar in der Weise, daß die Zwischenräume 17 nach außen hin und damit anströmseitig offen sind und nach innen durch die Axialstege 13 begrenzt werden, während die Zwischenräume 18 außenseitig durch die sich überlappenden Axialstege 16 und die Überlappungsstege 14 geschlossen sind, jedoch zu dem Austrittskanal 10 hin und damit abströmseitig offen sind, weil dort die Axialstege 13 und Überlappungsstege 15 nicht bis an die jeweils benachbarte Filterscheibe 11 reichen, sondern einen Spalt - beispielhaft mit 19 bezeichnet - freilassen.

Die Axialstege 13, 16 sind gasdicht ausgebildet, während die Filterscheiben 11, 12 ansonsten aus porösem, für Dieselrußpartikel filterwirksamem Keramikmaterial bestehen. Das über die Eintrittsstutzen 7, 8 eintretende Abgas gelangt zunächst in die außenseitig offenen Zwischenräume 17 und durchströmt dann die jeweils beiderseitigen Filterscheiben 11, 12 und gelangt auf diese Weise in die jeweils benachbarten Zwischenräume 18, wo das Abgas dann über die Spalte 19 in den Austrittskanal 10 gelangt, wie dies durch die Pfeile symbolisiert ist. Die Filterscheiben 11, 12 halten die Rußpartikel auf, so daß in den Austrittskanal 10 von Rußpartikeln gereinigtes Abgas gelangt. Als Material für die Filterscheiben 11, 12 kommt insbesondere das in der EP 0 796 830 A1 beschriebene SiC-Material in Frage.

Das unterste Paar von Filterscheiben 11, 12 ist mit elektrischen Kontakten 20, 21 versehen, über die auf diese Filterscheiben 11, 12 ein elektrischer Strom gegeben werden kann. Da sie elektrisch leitfähig sind, erhitzen sie sich bei Stromaufgabe auf eine solche Temperatur, daß der aufgefangene Ruß abbrennt und so die Filterscheiben 11, 12 regeneriert werden.

Aus Figur 2 ist zu ersehen, daß die Filterscheibe 12 einen kreisrunden Umfang hat, jedoch in den Umfang keilförmige Einbuchtungen - beispielhaft mit 22 bezeichnet - eingeformt sind. Auch die Filterscheiben 11 weisen solche Einbuchtungen 22 auf. Die Einbuchtungen 22 ergeben Axialkanäle und erlauben somit eine Axialströmung in dem Filtergehäuse 2 und sorgen so für eine gute Verteilung des Abgases und gleichmäßige Einströmung in die einströmseitig offenen Zwischenräume 17.

## Patentansprüche

1. Filtereinrichtung (1), insbesondere zum Abscheiden von Dieselrußpartikel aus Dieselmotorabgasen, mit einem Filtergehäuse (2), das einen Gaseintritt (7, 8) und einen Austrittskanal (10) aufweist und in dem ein Filterkörper aus porösem, filterwirksamem Keramikmaterial angeordnet ist, der den Austrittskanal (10) wenigstens teilweise umgibt und im wesentlichen in Richtung auf den Austrittskanal (10) durchströmt ist, wobei der Filterkörper von gestapelten Filterscheiben (11, 12) aus porösem, filterwirksamem Material gebildet ist, die abwechselnd einströmseitig und ausströmseitig Zwischenräume (17, 18) trennen und wobei der Gaseintritt (7, 8) auf Höhe des Filterkörpers liegt und quer zum Austrittskanal (10) gerichtet ist, **dadurch gekennzeichnet, daß** die Zwischenräume (17, 18) und der Austrittskanal (10) offen ohne zusätzliche Filterelemente ausgebildet sind und daß die Filterscheiben (11, 12) eine Dicke von maximal 2 mm und eine mittlere Porengröße von 10 bis 100 µm haben.

2. Filtereinrichtung nach Anspruch 1, **dadurch gekennzeichnet, daß** der Gaseintritt (7, 8) radial und/oder tangential gerichtet ist.

3. Filtereinrichtung nach Anspruch 1 oder 2, **dadurch gekennzeichnet, daß** der Gaseintritt in axialer Richtung mehrere Gaseintrittsöffnungen (7, 8) aufweist und sich der Filterkörper über sämtliche Gaseintrittsöffnungen (7, 8) erstreckt.

4. Filtereinrichtung nach einem der Ansprüche 1 bis 3, **dadurch gekennzeichnet, daß** die Filterscheiben (11, 12) kreisförmig sind.

5. Filtereinrichtung nach einem der Ansprüche 1 bis 4, **dadurch gekennzeichnet, daß** der von den Filterscheiben (11, 12) eingeschlossene Austrittskanal (10) kreisrunden Querschnitt hat.

6. Filtereinrichtung nach einem der Ansprüche 1 bis 5, **dadurch gekennzeichnet, daß** die Filterscheiben kegelförmig ausgebildet und so gestapelt sind, daß benachbarte Filterscheiben abwechselnd außen- und innenseitig aneinander liegen.

7. Filtereinrichtung nach einem der Ansprüche 1 bis 5, **dadurch gekennzeichnet, daß** die Filterscheiben (11, 12) eben ausgebildet sind und sich parallel zueinander erstrecken.

8. Filtereinrichtung nach Anspruch 7, **dadurch gekennzeichnet, daß** die Zwischenräume (17, 18) abwechselnd außenseitig und innenseitig über Axialstege (13, 16) abgeschlossen sind.

9. Filtereinrichtung nach Anspruch 8, **dadurch gekennzeichnet, daß** die Axialstege (13, 16) gasdicht ausgebildet sind.

10. Filtereinrichtung nach Anspruch 8 oder 9, **dadurch gekennzeichnet, daß** sich Filterscheiben (12) mit eintrittsseitigen Axialstegen (16) und Filterscheiben (11) mit austrittsseitigen, jeweils in gleicher Richtung erstreckenden Axialstegen (13) abwechseln, welche jeweils an der benachbarten Filterscheibe (11, 12) oder am Filtergehäuse (2) anliegen.

11. Filtereinrichtung nach Anspruch 10, **dadurch gekennzeichnet, daß** die Filterscheiben (11, 12) an den den Axialstegen (13, 16) gegenüberliegenden Seiten an diesen anliegende Überlappungsstege (14, 15) aufweisen.

12. Filtereinrichtung nach Anspruch 11, **dadurch gekennzeichnet, daß** Axialsteg (16) und Überlappungssteg (15) einer Filterscheibe (12) in die gleiche axiale Richtung abstehen.

13. Filtereinrichtung nach einem der Ansprüche 1 bis 12, **dadurch gekennzeichnet, daß** die Filterscheiben (11, 12) über den Umfang verteilt Einbuchtungen (22) aufweisen.

14. Filtereinrichtung nach Anspruch 13, **dadurch gekennzeichnet, daß** die Einbuchtungen (22) keilförmig ausgebildet sind.

15. Filtereinrichtung nach einem der Ansprüche 1 bis 14, **dadurch gekennzeichnet, daß** das Filtergehäuse (2) den Filterkörper bis auf den Eintrittsbereich eng umgibt.

16. Filtereinrichtung nach einem der Ansprüche 1 bis 15, **dadurch gekennzeichnet, daß** das Filtergehäuse (2) mit einer Wärmeisolierschicht (6) versehen ist.

17. Filtereinrichtung nach einem der Ansprüche 1 bis 16, **dadurch gekennzeichnet, daß** der Austrittskanal zwei Austrittsöffnungen für den Austritt aus dem Filtergehäuse (2) aufweist.

18. Filtereinrichtung nach einem der Ansprüche 1 bis 17, **dadurch gekennzeichnet, daß** die Filterscheiben aus SiC oder einem anderen Carbid der Schwermetalle bestehen.

19. Filtereinrichtung nach einem der Ansprüche 1 bis 18, **dadurch gekennzeichnet, daß** wenigstens ein Teil der Filterscheiben (11, 12) mindestens teilweise elektrisch leitfähig ausgebildet ist.

20. Filtereinrichtung nach Anspruch 19, **dadurch gekennzeichnet, daß** die elektrische leitfähigen Filterscheiben (11, 12) mit elektrischen Kontakten (20, 21) versehen sind.

21. Filtereinrichtung nach Anspruch 19 oder 20, **dadurch gekennzeichnet, daß** wenigstens zwei benachbarte Filterscheiben (11, 12) elektrisch leitfähig und mit elektrischen Kontakten (20, 21) versehen sind.

22. Filterscheiben nach einem der Ansprüchen 1 bis 21, **dadurch gekennzeichnet, daß** die Filterscheiben (11, 12) eine mittlere Porengröße zwischen 30 und 80 µm haben.

## Claims

1. Filter device (1), particularly for separating diesel soot particles from diesel engine exhaust, with a filter housing (2), which has a gas inlet (7, 8) and an outlet channel (10) and in which a filter body made of porous ceramic material with a filtering effect is arranged, which at least partly surrounds the outlet channel (10) and is passed through basically in the direction of the outlet channel (10), in which the filter body is made of stacked filter discs (11, 12) made of porous material with a filtering effect, which alternately separate spaces (17, 18) on the inlet side and the outlet side and in which the gas inlet (7, 8) is on a level with the filter body directed crosswise to the outlet channel (10), **characterised by the fact** that the spaces (17, 18) and the outlet channel (10) are open without additional filter elements and the filter discs (11, 12) have a maximum thickness of 2 mm and an average pore size of 10 to 100 µm.

2. Filter device according to claim 1, **characterised by the fact** that the gas inlet (7, 8) is directed radially and/or tangentially.

3. Filter device according to claim 1 or 2, **characterised by the fact** that the gas inlet has several gas inlet openings (7, 8) in the axial direction and the filter body extends over all the gas inlet openings (7, 8).

4. Filter device according to one of claims 1 to 3, **characterised by the fact** that the filter discs (11, 12) are circular.

5. Filter device according to one of claims 1 to 4, **characterised by the fact** that the outlet channel (10) enclosed by the filter discs (11, 12) has a circular cross section.

6. Filter device according to one of claims 1 to 5, **characterised by the fact** that the filter discs are conical and stacked so that neighbouring filter discs are adjacent to each other alternately on the outside and on the inside.

7. Filter device according to one of claims 1 to 5, **characterised by the fact** that the filter discs (11, 12) are flat and extend parallel to each other.

8. Filter device according to claim 7, **characterised by the fact** that the spaces (17, 18) are closed alternately on the outside and on the inside by axial links (13, 16).

9. Filter device according to claim 8, **characterised by the fact** that the axial links (13, 16) are gastight.

10. Filter device according to claim 8 or 9, **characterised by the fact** that filter discs (12) with axial links (16) on the inlet side and filter discs (11) with axial links (13) on the outlet side extending in the same direction alternate and are adjacent to neighbouring filter discs (11, 12) or the filter housing (2).

11. Filter device according to claim 10, **characterised by the fact** that on the sides opposite the axial links (13, 16) the filter discs (11, 12) have overlapping links (14, 15) which are adjacent to them.

12. Filter device according to claim 11, **characterised by the fact** that the axial link (16) and overlapping link (15) of a filter disc (12) stick out in the same axial direction.

13. Filter device according to one of claims 1 to 12, **characterised by the fact** that the filter discs (11, 12) have indentations (22) distributed over the circumference.

14. Filter device according to claim 13, **characterised by the fact** that the indentations (22) are wedge shaped.

15. Filter device according to one of claims 1 to 14, **characterised by the fact** that the filter housing (2) surrounds the filter body closely as far as the inlet area.

16. Filter device according to one of claims 1 to 15, **characterised by the fact** that the filter housing (2) has a heat insulation layer (6).

17. Filter device according to one of claims 1 to 16, **characterised by the fact** that the outlet channel has two outlet openings for the outlet from the filter housing (2).

18. Filter device according to one of claims 1 to 17, **characterised by the** fact that the filter discs consist of SiC or another heavy metal carbide.

19. Filter device according to one of claims 1 to 18, **characterised by the fact** that at least a part of the filter discs (11, 12) is at least partly electrically conductive.

20. Filter device according to claim 19, **characterised by the fact** that the electrically conductive filter discs (11, 12) have electrical contacts (20, 21).

21. Filter device according to claim 19 or 20, **characterised by the fact** that at least two neighbouring filter discs (11, 12) are electrically conductive and have electrical contacts (20, 21).

22. Filter discs according to one of claims 1 to 21, **characterised by the fact** that the filter discs (11, 12) have an average pore size of between 30 and 80 µm.

## Revendications

1. Dispositif de filtration (1), notamment pour extraire des particules de calamine contenues dans les gaz d'échappement de moteurs Diesel, comprenant un carter de filtration (2) présentant une entrée des gaz (7, 8) et un conduit de sortie (10) et dans lequel est placé un corps filtrant composé d'une matière céramique filtrante et poreuse qui entoure au moins en partie le conduit de sortie (10) et qui est parcouru essentiellement en direction du conduit de sortie (10), le corps filtrant étant formé par des disques filtrants empilés (11, 12) en une matière filtrante poreuse, qui séparent alternativement du coté de l'entrée et du côté de la sortie des intervalles (17, 18), et l'entrée des gaz (7, 8) étant située à la hauteur du corps filtrant et orientée transversalement par rapport au conduit de sortie (10), **caractérisé en ce que** les intervalles (17, 18) et le conduit de sortie (10) sont réalisés ouverts, sans éléments filtrants supplémentaires, et **en ce que** les disques filtrants (11, 12) possèdent une épaisseur de 2 mm au maximum et des pores d'une dimension moyenne comprise entre 10 et 100 µm.

2. Dispositif de filtration selon la revendication 1, **caractérisé en ce que** l'entrée des gaz (7, 8) est orientée radialement et/ou tangentiellement.

3. Dispositif de filtration selon la revendication 1 ou 2, **caractérisé en ce que** l'entrée des gaz comporte dans la direction axiale plusieurs ouvertures d'entrée des gaz (7, 8) et **en ce que** le corps filtrant s'étend sur l'ensemble des ouvertures d'entrée des gaz (7, 8).

4. Dispositif de filtration selon l'une des revendications 1 à 3, **caractérisé en ce que** les disques filtrants (11, 12) sont de forme circulaire.

5. Dispositif de filtration selon l'une des revendications 1 à 4, **caractérisé en ce que** le conduit de sortie (10) entouré par les disques filtrants (11, 12) a une section transversale circulaire.

6. Dispositif de filtration selon l'une des revendications 1 à 5, **caractérisé en ce que** les disques filtrants sont réalisés avec une forme tronconique et sont empilés de telle manière que des disques filtrants adjacents sont appliqués l'un contre l'autre tour à tour du côté intérieur et du côté extérieur.

7. Dispositif de filtration selon l'une des revendications 1 à 5, **caractérisé en ce que** les disques filtrants (11, 12) sont réalisés plans et s'étendent parallèlement entre eux.

8. Dispositif de filtration selon la revendication 7, **caractérisé en ce que** les intervalles (17, 18) sont fermés tour à tour du côté extérieur et du côté intérieur par des ailes axiales (13, 16).

9. Dispositif de filtration selon la revendication 8, **caractérisé en ce que** les ailes axiales (13, 16) sont réalisées étanches aux gaz.

10. Dispositif de filtration selon la revendication 8 ou 9, **caractérisé en ce que** des disques filtrants (12) dotés d'ailes axiales (16) situées côté entrée alternent avec des disques filtrants (11) dotés d'ailes axiales (13) situées côté sortie et s'étendant dans la même direction, lesquelles sont toujours appliquées contre le disque filtrant adjacent (11, 12) ou contre le carter de filtration (2).

11. Dispositif de filtration selon la revendication 10, **caractérisé en ce que** les disques filtrants (11, 12) présentent sur les côtés opposés aux ailes axiales (13, 16) des ailes de chevauchement (14, 15) appliquées contre ces côtés.

12. Dispositif de filtration selon la revendication 11, **caractérisé en ce que** l'aile axiale (16) et l'aile de chevauchement (15) d'un disque filtrant (12) font saillie dans la même direction axiale.

13. Dispositif de filtration selon l'une des revendications 1 à 12, **caractérisé en ce que** les disques filtrants (11, 12) présentent des creux (22) répartis sur le pourtour.

14. Dispositif de filtration selon la revendication 13, **caractérisé en ce que** les creux (22) sont réalisés en forme de coin.

15. Dispositif de filtration selon l'une des revendications 1 à 14, **caractérisé en ce que** le carter de filtration (2) entoure étroitement le corps filtrant à l'exception de la zone d'entrée.

16. Dispositif de filtration selon l'une des revendications 1 à 15, **caractérisé en ce que** le carter de filtration (2) est doté d'une couche d'isolation thermique (6).

17. Dispositif de filtration selon l'une des revendications 1 à 16, **caractérisé en ce que** le conduit de sortie présente deux ouvertures de sortie constituant la sortie du carter de filtration (2).

18. Dispositif de filtration selon l'une des revendications 1 à 17, **caractérisé en ce que** les disques filtrants sont composés de SiC ou d'un autre carbure des métaux lourds.

19. Dispositif de filtration selon l'une des revendications 1 à 18, **caractérisé en ce qu'**au moins une partie des disques filtrants (11, 12) est au moins en partie réalisée de manière électriquement conductible.

20. Dispositif de filtration selon la revendication 19, **caractérisé en ce que** les disques filtrants (11, 12) électriquement conductibles sont munis de contacts électriques (20, 21).

21. Dispositif de filtration selon la revendication 19 ou 20, **caractérisé en ce qu'**au moins deux disques filtrants adjacents (11, 12) sont électriquement conductibles et sont munis de contacts électriques (20, 21).

22. Disques filtrants selon l'une des revendications 1 à 21, **caractérisés en ce que** les disques filtrants (11, 12) possèdent des pores d'une dimension moyenne comprise entre 30 et 80 µm.
